(19) Europäisches Patentamt / European Patent Office / Office européen des brevets

(11) **EP 2 927 568 A1**

(12) **DEMANDE DE BREVET EUROPEEN**

(43) Date de publication:
07.10.2015 Bulletin 2015/41

(51) Int Cl.:
*F21S 8/10* *(2006.01)*      *G02B 19/00* *(2006.01)*
*F21Y 101/02* *(2006.01)*

(21) Numéro de dépôt: **15161188.6**

(22) Date de dépôt: **26.03.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **01.04.2014 FR 1452864**

(71) Demandeur: **VALEO VISION**
**93012 Bobigny Cedex (FR)**

(72) Inventeur: **Albou, Pierre**
**75013 PARIS (FR)**

(54) **Système d'éclairage à longue portée pour véhicule automobile**

(57) La présente invention concerne un système d'éclairage pour véhicule automobile qui comprend
- une lentille (12) délimitée par une face libre (13) coïncidant avec un plan focal (14) de la lentille, et
- une source de lumière (24) positionnée en amont du plan focal de la lentille par rapport au sens de propagation de la lumière.

La lentille comprend une saillie (22) ayant une forme générale de secteur de cylindre, délimitée par le plan focal (14) de la lentille, une base plane opposée à ce plan focal, dite base libre, et deux faces adjacentes s'étendant entre le plan focal de la lentille et la base libre.

La source de lumière comporte une surface émettant de la lumière sensiblement en forme générale de disque, appelée disque lumineux (26), placée en regard de la base libre de la saillie (22), de façon à permettre la transmission de lumière émise par le disque lumineux (26) dans la saillie (22).

Fig. 2

Printed by Jouve, 75001 PARIS (FR)

**Fig. 4**

**Description**

La présente invention concerne le domaine technique des systèmes d'éclairage pour véhicule automobile. Plus particulièrement, l'invention concerne un système d'éclairage formant un projecteur à longue portée pour véhicule automobile. Un projecteur a pour principale fonction d'éclairer la route, et comprend divers systèmes optiques et sources de lumière.

Il est connu de faire fonctionner un projecteur selon deux modes. Le premier mode, communément appelé « feu de croisement », fournit un éclairage légèrement dévié vers le bas afin d'éclairer la route à l'avant du véhicule sur environ une cinquantaine de mètres et de ne pas éblouir d'éventuels automobilistes qui circuleraient en sens inverse sur une voie adjacente. Dans ce mode de fonctionnement, le conducteur est capable de mieux percevoir l'environnement à courte distance s'il circule de nuit ou par des conditions météorologiques difficiles (brouillard, neige, pluie). Le second mode de fonctionnement, couramment appelé «feu de route », procure un éclairage de forte intensité vers l'avant du véhicule et permet de considérablement accroître le champ de vision du conducteur, notamment de nuit et en cas de conditions météorologiques difficiles. En revanche, l'orientation du faisceau lumineux est susceptible dans ce cas d'éblouir des automobilistes circulant en sens inverse sur une voie adjacente ou circulant devant sur la même voie, c'est pourquoi il est nécessaire de basculer en feu de croisement dès que ce cas se présente.

Il est également connu de prévoir un mode de fonctionnement supplémentaire du projecteur dit ADB (*Adaptive Driving Beam* en anglais) ou encore « faisceau sélectif » correspondant à un mode « feu de route » muni d'un ou plusieurs masquages des zones où sont présents des véhicules venant en sens inverse ou des véhicules roulant devant. On évite ainsi l'éblouissement des autres conducteurs tout en conservant un grand champ de vision. On pourra se référer au document EP-2 415 638 A2 pour plus de précisions sur le mode de fonctionnement ADB.

Les modes de fonctionnement énoncés ci-dessus sont utiles mais ne permettent pas, dans certains cas, d'éclairer la route dans l'axe de déplacement du véhicule sur une distance suffisamment importante. En effet, lorsque le véhicule circule à vitesse élevée, par exemple sur un circuit adapté, il est nécessaire de laisser au conducteur un temps de réaction suffisant pour qu'il puisse réagir si un obstacle surgit sur la route, c'est-à-dire d'anticiper la détection visuelle de l'obstacle.

Il est connu d'utiliser un dispositif d'émission d'un faisceau lumineux dit de type « voile », décrit par exemple dans le document EP-2 597 360 A1, c'est-à-dire un faisceau lumineux délimité par deux plans de coupure, en général par une première coupure suivant un plan vertical longitudinal médian du véhicule et une deuxième coupure suivant un plan horizontal, le maximum d'intensité lumineuse se trouvant à proximité de l'intersection des deux plans de coupure. Cependant, la position de ce maximum engendre d'importants contrastes de luminosité au niveau des plans de coupure pouvant gêner le conducteur. Le document EP-2 690 352 A1 propose de remédier à ce problème en formant le faisceau lumineux de type « voile »par projection d'une image lumineuse formée par balayage d'un rayonnement lumineux. En pilotant l'intensité lumineuse du rayonnement balayé, on contrôle l'intensité au niveau des bords de coupures. Toutefois, le balayage est réalisé à l'aide de moyens à micro-miroirs, dont la commande est relativement complexe à réaliser.

L'invention a pour but de permettre d'éclairer la route par un faisceau de type « voile » à intensité lumineuse élevée, du moins localement, ceci sans générer de contrastes importants, et avec des moyens simples faciles à commander.

A cet effet, on prévoit selon l'invention un système d'éclairage pour véhicule automobile, comprenant

- une lentille délimitée par une face libre coïncidant avec un plan focal de la lentille, et
- une source de lumière positionnée en amont du plan focal de la lentille par rapport au sens de propagation de la lumière,

caractérisé en ce que la lentille comprend une saillie ayant une forme générale de secteur de cylindre, délimitée par le plan focal de la lentille, une base plane opposée à ce plan focal, dite base libre, et deux faces adjacentes s'étendant entre le plan focal de la lentille et la base libre, et en ce que la source de lumière comporte une surface émettant de la lumière sensiblement en forme générale de disque, appelée disque lumineux, placée en regard de la base libre de la saillie, de façon à permettre la transmission de lumière émise par le disque lumineux dans la saillie.

Ainsi, une très grande partie du faisceau lumineux généré par la source se propage à l'intérieur de la saillie depuis sa base libre puis dans la lentille jusqu'à la surface de sortie de cette lentille.

La disposition des faces de la saillie permet de créer des plans de coupure du faisceau lumineux sortant de la lentille.

De plus, la déperdition de puissance optique est très faible entre le disque lumineux et la lentille. Ainsi, en utilisant une source ayant une très grande luminance, on peut éclairer la route sur une grande distance.

Les limites du faisceau lumineux sortant de la lentille sont une projection de l'intersection de la saillie et du plan focal de la lentille. Ce faisceau est ainsi de type « voile », délimité par des plans de coupure.

Par ailleurs, du fait que la source se trouve à une distance non nulle (car supérieure ou égale à la hauteur de la saillie) du plan focal de la lentille, on limite les contrastes dans le faisceau lumineux sortant de la lentille. Enfin, le système d'éclairage est relativement simple car notamment ses éléments sont fixes.

Avantageusement, les faces adjacentes sont reliées entre elles par une arête de jonction coïncidant sensiblement avec un axe optique de la lentille.

Avantageusement, le foyer de la lentille coïncide sensiblement avec une extrémité de l'arête de jonction.

On peut ainsi aisément positionner la saillie par rapport à la lentille.

De préférence, la projection du disque lumineux sur la base libre de la saillie est à une distance de décalage non nulle de l'arête de jonction.

On s'assure ainsi que la zone de forte intensité lumineuse du faisceau sortant de la lentille se trouve à une distance non nulle des plans de coupure du faisceau générés par les faces de la saillie. Ceci limite d'autant les contrastes de luminosité gênants au niveau des bords de coupure. On limite ainsi également les contrastes au sein de la superposition d'au moins deux faisceaux créés par des systèmes d'éclairage selon l'invention, par exemple si les projecteurs avant gauche et avant droit du véhicule en sont équipés, au niveau des plans de coupure de chacun des faisceaux.

De préférence, la projection du centre du disque lumineux sur la base libre de la saillie est positionnée sur une bissectrice de cette base libre.

Le faisceau lumineux sortant de la lentille est ainsi symétrique par rapport au plan bissecteur des plans de coupures.

Avantageusement, la base libre de la saillie est espacée du disque lumineux d'une distance de protection non nulle, préférentiellement égale à 0,2 mm.

Cette distance de protection limite la transmission de chaleur gênante entre la source de lumière et la saillie.

De préférence, la hauteur de la saillie est fonction de la distance de décalage et d'un indice de réfraction d'un matériau dans lequel est formée la saillie.

Ainsi, on détermine cette hauteur de manière à ce que le faisceau lumineux passe par tous les points de la surface d'intersection de la saillie avec le plan focal.

Avantageusement, la dimension angulaire du secteur de cylindre formant la saillie est comprise entre 40 et 60°, de préférence égale à 45°.

Le faisceau lumineux sortant de la lentille présente ainsi une forme générale de voile, dont les plans de coupure s'intersectent selon un angle proche de 90°.

De préférence, la saillie est fabriquée, au moins en partie, dans un matériau choisi parmi le polyméthacrylate de méthyle (PMMA), le polycarbonate (PC) et le silicone.

Ces matériaux sont transparents aux longueurs d'onde du domaine visible et possèdent des coefficients d'absorption très faibles pour ces longueurs d'onde. De plus, si la dimension angulaire du secteur de cylindre formant la saillie est de l'ordre de 45°, la valeur de l'indice de réfraction de ces matériaux (de l'ordre de 1,5) interdit toute transmission du faisceau à travers ces faces, conformément aux lois de Snell-Descartes pour la réfraction. Ces faces réfléchissent alors intégralement le faisceau et assurent la conservation d'un maximum d'énergie optique lors de son passage dans la saillie et la lentille.

Avantageusement, la saillie est venue de matière avec le reste de la lentille.

Il n'y a ainsi aucune interface nuisible entre la saillie et la lentille qui pourrait générer des réflexions partielles et/ou des déviations indésirées du faisceau lumineux.

De préférence, la source de lumière comprend une source laser émettant de la lumière à travers un dispositif de conversion de longueur d'onde comprenant une couche de matériau phosphorescent.

La source laser est capable de délivrer un faisceau lumineux monochromatique d'une importante puissance optique. La couche de matériau phosphorescent est un convertisseur de longueur d'onde, transformant le faisceau monochromatique en lumière blanche.

On prévoit également selon l'invention une lentille pour système d'éclairage, caractérisée en ce qu'elle est destinée à équiper un système d'éclairage selon l'invention.

L'invention sera mieux comprise à la lecture de la description qui va suivre donnée uniquement à titre d'exemple et faite en référence aux dessins dans lesquels :

- la figure 1 est une vue en perspective d'un système d'éclairage selon l'invention,
- la figure 2 est une vue en perspective à plus grande échelle d'une partie du système d'éclairage de la figure 1,
- la figure 3 est une vue en perspective de la saillie de la lentille du système d'éclairage de la figure 1, et
- la figure 4 est un graphique illustrant la répartition de l'intensité lumineuse du faisceau sortant du système d'éclairage de la figure 1.

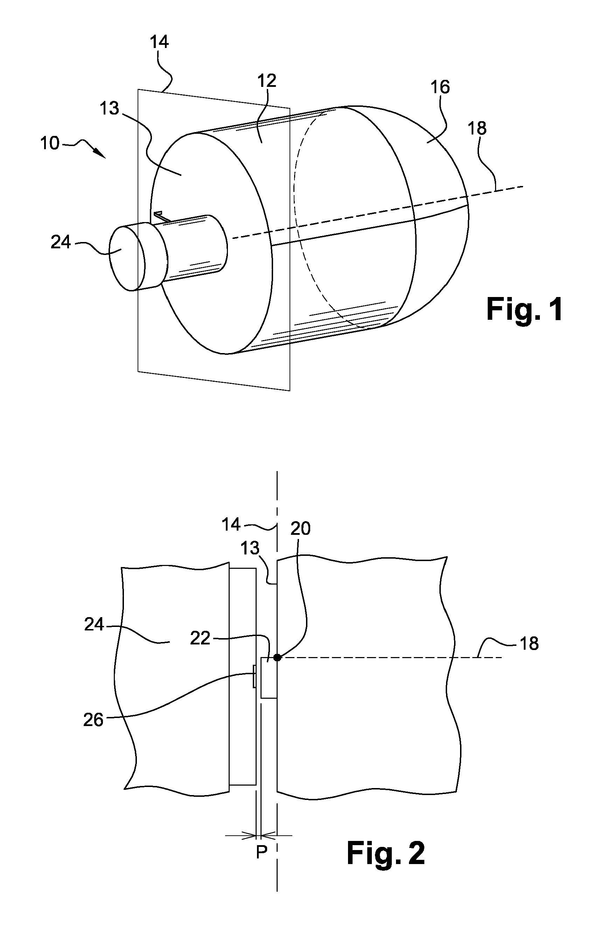

En référence aux figures 1 et 2, un système d'éclairage 10 pour véhicule automobile comprend une lentille 12 délimitée par une face libre 13 coïncidant avec un plan focal 14 de la lentille et une surface de sortie 16 en forme générale d'hémisphère. La lentille est également définie par un axe optique 18 et un foyer 20 situé à l'intersection de l'axe optique et du plan focal. La surface de sortie de la lentille est un dioptre stigmatique entre le foyer 20 et l'infini. La lentille comporte une saillie 22, de préférence venue de matière avec le reste de la lentille, dont la forme et les fonctions seront décrites plus loin. La lentille et la saillie sont constituées d'un matériau transparent dans le domaine visible dont un indice de réfraction N est par exemple de l'ordre de 1,5.

Une source de lumière 24 classique est placée en regard de la saillie 22. Celle-ci comporte une diode laser (non représentée) émettant un faisceau lumineux monochromatique. A titre d'exemple de réalisation, la diode délivre une puissance optique de l'ordre de 1,6 W, et la longueur d'onde du faisceau émis est par exemple égale à 445 nm, de sorte que la diode émette un laser bleu. De façon connue en soi, une cellule (non représentée) comprenant un matériau phosphorescent est placée en aval de la diode par rapport au sens de propagation du faisceau. Une surface externe 26 de cette cellule, appelée par la suite disque lumineux, est représentée en figure 2. La cellule en matériau phosphorescent forme un dispositif de conversion de longueur d'onde, qui permet de transformer le faisceau lumineux monochromatique en lumière blanche, qui est émise par le disque lumineux comme le ferait un matériau lambertien, c'est-à-dire uniformément dans toutes les directions. Avec la diode laser décrite au-dessus, le flux lumineux est de l'ordre de 250 lumen.

Le système d'éclairage comporte aussi un radiateur (non représenté pour des raisons de lisibilité des figures) positionné en périphérie de la source de lumière de manière à diffuser le plus possible la chaleur qui s'en dégage. On peut prévoir qu'il soit fixé à la face libre 13 de la lentille.

La face libre 13 de la lentille peut également accueillir des moyens de fixation (non représentés), par exemple des vis si les propriétés mécaniques du matériau constituant la lentille 12 le permettent, à condition que la partie de ces moyens de fixation pénétrant dans la lentille ne coupe pas le faisceau lumineux se propageant dans la lentille.

Pour assurer une protection thermique supplémentaire de la saillie et plus généralement de la lentille, le disque lumineux 26 et la saillie 22 sont espacées d'une distance de protection P pour permettre à la chaleur dégagée par la source de se dissiper partiellement dans la couche d'air ainsi conférée. L'élévation en température de la saillie est alors réduite efficacement. Il est néanmoins préférable de ne pas trop espacer le disque lumineux et la saillie afin de permettre la transmission d'un maximum de rayonnement lumineux dans la lentille. Une valeur de distance de protection égale à 0,2 mm permet d'obtenir un bon compromis en termes de protection thermique et de transmission optique.

La température maximale qu'atteint la saillie 22 lors du fonctionnement du système d'éclairage conditionne d'ailleurs en partie le choix du matériau constituant la lentille 12. On peut utiliser du polyméthacrylate de méthyle (PMMA) qui possède les avantages d'être bon marché et de présenter un coefficient d'absorption très faible dans le domaine visible (peu d'énergie optique est dissipée lors du passage du faisceau lumineux dans ce matériau). Toutefois, le PMMA perd cette propriété dès que sa température dépasse 100°C. Le polycarbonate (PC) constitue une variante envisageable sur une plage de température s'étendant jusqu'à 130°C. Le silicone est quant à lui utilisable jusqu'à 200°C, mais il est en revanche plus onéreux que les deux matériaux précédents.

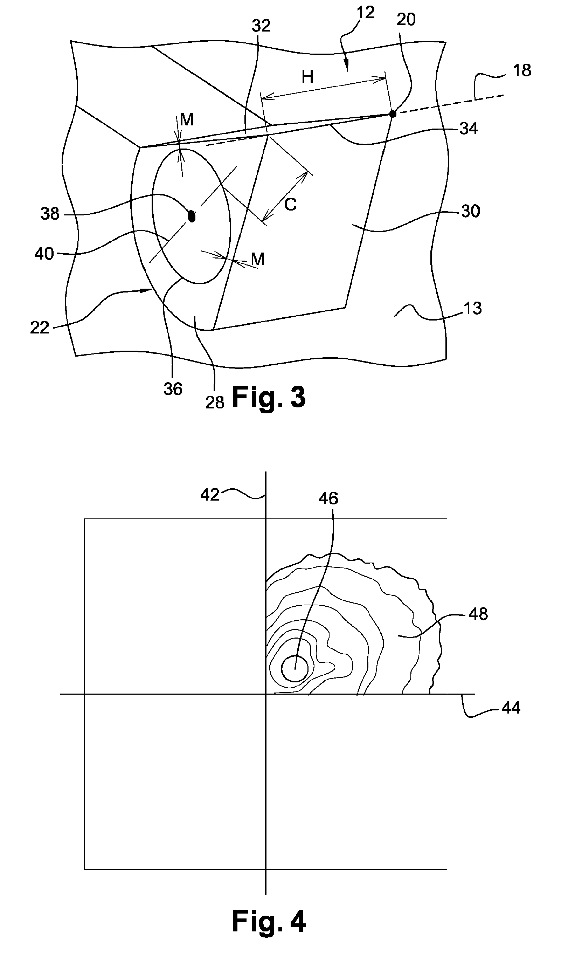

En référence à la figure 3, la saillie 22 a une forme générale de secteur de cylindre dont une base libre 28 est située en regard du disque lumineux 26, la base libre 28 et le disque lumineux 26 s'étendant dans des plans sensiblement parallèles séparés par la distance de protection P. La saillie 22 comporte également deux faces 30, 32 s'intersectant suivant une arête 34 de longueur H incluse dans l'axe optique de la lentille, une extrémité de l'arête étant confondue avec le foyer 20 de la lentille. La longueur H de l'arête 34 représente d'ailleurs la hauteur du secteur de cylindre formant la saillie 22. On a représenté sur la même figure 3 par un contour 36 et un point 38 respectivement des projections orthogonales du disque lumineux et de son centre. La projection du centre est placée sur une bissectrice 40 de la base libre, et la projection du disque lumineux 26 est localisée à une distance de décalage C non nulle de l'arête et à une distance de limite M des faces de la saillie. On verra dans la suite que ces propriétés géométriques sont intéressantes pour l'utilisation qui est faite de la saillie.

On va maintenant décrire le fonctionnement du système d'éclairage 10. La diode laser de la source de lumière 24 émet un faisceau lumineux monochromatique en direction du dispositif de conversion de longueur d'onde. Le disque lumineux 26 émet alors de la lumière blanche dans toutes les directions. En particulier, une faible partie du faisceau est perdue dans l'air à cause de la distance de protection P entre le disque lumineux 26 et la saillie 22, et une grande partie du faisceau lumineux blanc est transmise à la saillie.

Les valeurs de la distance de protection P, de la distance de limite M et de l'indice de réfraction N du matériau constituant la saillie sont choisies de telle sorte que tous les faisceaux rencontrant une face 30 ou 32 de la saillie le font suivant un angle (mesuré par rapport à la normale à la face) supérieur à l'angle limite de réfraction selon les lois de Snell-Descartes pour la réfraction. Les faisceaux sont alors totalement réfléchis, si bien que tous les faisceaux émis par le disque lumineux transmis à la saillie se propagent jusqu'à la lentille. La saillie forme ainsi un guide de lumière.

Afin d'éclairer toute une surface d'intersection entre la saillie 22 et le plan focal 14 de la lentille, on choisit la longueur H de l'arête 34 en fonction de la distance de décalage C et de l'indice de réfraction N selon la relation

$$H = C . \sqrt{N^2 - 1}$$

La surface d'intersection ainsi éclairée est ensuite projetée par la lentille. La figure 4 illustre la répartition en intensité lumineuse d'une projection du faisceau lumineux sortant de la lentille 12 sur une surface plane perpendiculaire à l'axe optique 18. Le faisceau est délimité par deux plans de coupure 42, 44 correspondant aux faces 30 et 32 de la saillie réfléchissant totalement les faisceaux lumineux qui les rencontrent. Ces plans 42 et 44 présentent un angle différent de celui du secteur de cylindre constituant la saillie. Cela est dû aux importantes aberrations engendrées par la lentille. C'est pour compenser ces aberrations que l'angle de la saillie est choisi entre 40° et 60°, et préférentiellement égal à 45° : on obtient ainsi des plans de coupure présentant un angle de l'ordre de 90°, comme les faisceaux de type « voile » généraux.

La répartition en intensité lumineuse se caractérise par l'existence d'une zone de forte intensité lumineuse 46, communément désignée par les termes anglo-saxons « hot spot », entourée d'une zone d'ambiance 48 dans laquelle l'intensité décroit graduellement (gradient d'intensité) de manière continue au fur et à mesure qu'on s'éloigne de la zone de forte intensité lumineuse. Ce gradient d'intensité résulte du fait que le disque lumineux se trouve à une distance non nulle du plan focal de la lentille. Le système 10 est ainsi capable d'éclairer sur une longue portée.

La zone de forte intensité lumineuse se trouve à une distance non nulle des bords de coupure grâce à la distance de limite M. On évite ainsi les contrastes importants de part et d'autre des plans de coupure.

Bien entendu, on pourra apporter à l'invention de nombreuses modifications sans sortir du cadre de celle-ci.

Les pièces peuvent présenter des dimensions différentes de celles énoncées précédemment.

Le faisceau lumineux peut être produit par une source autre qu'une diode laser.

La saillie et la lentille peuvent être constituées de matériaux différents.

## Revendications

1. Système d'éclairage (10) pour véhicule automobile, comprenant

   - une lentille (12) délimitée par une face libre (13) coïncidant avec un plan focal (14) de la lentille, et
   - une source de lumière (24) positionnée en amont du plan focal de la lentille par rapport au sens de propagation de la lumière,

   **caractérisé en ce que** la lentille comprend une saillie (22) ayant une forme générale de secteur de cylindre, délimitée par le plan focal (14) de la lentille, une base plane (28) opposée à ce plan focal, dite base libre, et deux faces adjacentes (30, 32) s'étendant entre le plan focal de la lentille et la base libre, et **en ce que** la source de lumière comporte une surface (26) émettant de la lumière sensiblement en forme générale de disque, appelée disque lumineux, placée en regard de la base libre de la saillie, de façon à permettre la transmission de lumière émise par le disque lumineux dans la saillie.

2. Système d'éclairage selon la revendication précédente, dans lequel les faces adjacentes sont reliées entre elles par une arête de jonction (34) coïncidant sensiblement avec un axe optique (18) de la lentille.

3. Système d'éclairage selon la revendication précédente, dans lequel le foyer de la lentille coïncide sensiblement avec une extrémité de l'arête de jonction.

4. Système d'éclairage selon la revendication 2 ou 3, dans lequel une projection du disque lumineux (36) sur la base libre de la saillie est à une distance de décalage (C) non nulle de l'arête de jonction.

5. Système d'éclairage selon l'une quelconque des revendications précédentes, dans lequel une projection du centre du disque lumineux (38) sur la base libre de la saillie est positionnée sur une bissectrice (40) de cette base libre.

6. Système d'éclairage selon l'une quelconque des revendications précédentes, dans lequel la base libre de la saillie est espacée du disque lumineux d'une distance de protection (P) non nulle, préférentiellement égale à 0,2 mm.

7. Système d'éclairage selon la revendication 6, dans lequel la hauteur (H) de la saillie est fonction de la distance de décalage (C) et d'un indice de réfraction (N) d'un matériau dans lequel est formée la saillie.

8. Système d'éclairage selon l'une quelconque des revendications précédentes, dans lequel la dimension angulaire du secteur de cylindre formant la saillie est comprise entre 40 et 60°, de préférence égale à 45°.

9. Système d'éclairage selon l'une quelconque des revendications précédentes, dans lequel la saillie est fabriquée, au moins en partie, dans un matériau choisi parmi le polyméthacrylate de méthyle (PMMA), le polycarbonate (PC) et le silicone.

10. Système d'éclairage selon l'une quelconque des revendications précédentes, dans lequel la saillie est dans le même matériau que le reste de la lentille.

11. Système d'éclairage selon la revendication précédente, dans lequel la saillie est venue de matière avec le reste de la lentille.

12. Système d'éclairage selon l'une quelconque des revendications précédentes, dans lequel la source de lumière comprend une source laser émettant de la lumière à travers un dispositif de conversion de longueur d'onde comprenant une couche de matériau phosphorescent.

14

12

13

10

16

18

24

**Fig. 1**

14 20

13

24

22

18

26

P

**Fig. 2**

**Fig. 3**

**Fig. 4**

Europäisches
Patentamt

European
Patent Office

Office européen
des brevets

## RAPPORT DE RECHERCHE EUROPEENNE

Numéro de la demande

EP 15 16 1188

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2005/207162 A1 (KOMATSU MOTOHIRO [JP]) 22 septembre 2005 (2005-09-22) * revendication 10; figures 5-9 * | 1-6,9-12 | INV. F21S8/10 G02B19/00 F21Y101/02 |
| A | * alinéas [0034] - [0037], [0063], [0067] - [0073], [0082], [0100] * ----- | 7,8 | |
| Y | JP 2009 105125 A (NICHIA CORP) 14 mai 2009 (2009-05-14) * abrégé * ----- | 1-6,9-12 | |
| Y | DE 102 52 228 A1 (AUTOMOTIVE LIGHTING REUTLINGEN [DE]) 7 août 2003 (2003-08-07) * revendications 1-4, 8, 10; figures 3, 4b,4c * * alinéas [0021], [0026] - [0029] * ----- | 1-6,9-12 | |
| Y | EP 0 748 978 A2 (NIPPON DENSO CO [JP] DENSO CORP [JP]) 18 décembre 1996 (1996-12-18) * revendication 1; figures 1-6 * * colonne 6, ligne 11 * ----- | 1-6,9-12 | |
| A | EP 2 436 968 A1 (VALEO VISION [FR]) 4 avril 2012 (2012-04-04) * abrégé; figures 1-5 * ----- | 1-12 | DOMAINES TECHNIQUES RECHERCHES (IPC) F21S F21Y G02B |
| A | EP 0 532 262 A2 (GEN ELECTRIC [US]) 17 mars 1993 (1993-03-17) * abrégé; figures 6,7,8 * ----- | 1,12 | |
| A | DE 10 2012 009596 A1 (DOCTER OPTICS SE [DE]) 21 novembre 2013 (2013-11-21) * alinéa [0104]; figures 1-32 * ----- | 1-12 | |
| A | DE 10 2011 002282 A1 (HELLA KGAA HUECK & CO [DE]) 31 octobre 2012 (2012-10-31) * abrégé; figures 1-3 * ----- | 1 | |

Le présent rapport a été établi pour toutes les revendications

| Lieu de la recherche | Date d'achèvement de la recherche | Examinateur |
|---|---|---|
| Munich | 1 juin 2015 | Giraud, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 16 1188

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-06-2015

| Document brevet cité au rapport de recherche | Date de publication | Membre(s) de la famille de brevet(s) | Date de publication |
|---|---|---|---|
| US 2005207162 A1 | 22-09-2005 | CN 1670425 A<br>DE 102005012649 A1<br>FR 2867839 A1<br>GB 2412159 A<br>JP 4339156 B2<br>JP 2005267998 A<br>US 2005207162 A1 | 21-09-2005<br>13-10-2005<br>23-09-2005<br>21-09-2005<br>07-10-2009<br>29-09-2005<br>22-09-2005 |
| JP 2009105125 A | 14-05-2009 | JP 5071037 B2<br>JP 2009105125 A | 14-11-2012<br>14-05-2009 |
| DE 10252228 A1 | 07-08-2003 | AUCUN | |
| EP 0748978 A2 | 18-12-1996 | DE 69626240 D1<br>DE 69626240 T2<br>EP 0748978 A2<br>JP H08339704 A<br>US 5772306 A | 27-03-2003<br>16-10-2003<br>18-12-1996<br>24-12-1996<br>30-06-1998 |
| EP 2436968 A1 | 04-04-2012 | EP 2436968 A1<br>FR 2965326 A1 | 04-04-2012<br>30-03-2012 |
| EP 0532262 A2 | 17-03-1993 | CA 2076089 A1<br>DE 69209943 D1<br>DE 69209943 T2<br>EP 0532262 A2<br>JP H0793043 B2<br>JP H05211003 A<br>US 5184882 A | 10-03-1993<br>23-05-1996<br>28-11-1996<br>17-03-1993<br>09-10-1995<br>20-08-1993<br>09-02-1993 |
| DE 102012009596 A1 | 21-11-2013 | CN 104303080 A<br>DE 102012009596 A1<br>DE 112013000679 A5<br>US 2015109810 A1<br>WO 2013170923 A1 | 21-01-2015<br>21-11-2013<br>23-10-2014<br>23-04-2015<br>21-11-2013 |
| DE 102011002282 A1 | 31-10-2012 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2415638 A2
- EP 2597360 A1
- EP 2690352 A1